# EUROPÄISCHE PATENTSCHRIFT

(11) **EP 3 235 358 B1**
(45) Veröffentlichungstag und Bekanntmachung des Hinweises auf die Patenterteilung: **18.03.2020**
(21) Anmeldenummer: 16166003.0
(22) Anmeldetag: 19.04.2016
(51) Int. Cl.: A01B 15/02, A01B 23/02

(54) **SCHARSPITZE ZUR VERWENDUNG IN EINEM SCHARSYSTEM ZUR BODENBEARBEITUNG**
PLOUGH POINT FOR USE IN A METERING SYSTEM FOR SOIL CULTIVATION
POINTE DE BANDE DESTINÉE À ÊTRE UTILISÉE DANS UN SYSTÈME DE SOC POUR LE TRAITEMENT DU SOL

(43) Veröffentlichungstag der Anmeldung: 25.10.2017
(73) Patentinhaber: Horsch Maschinen GmbH, 92421 Schwandorf (DE)
(72) Erfinder: WEITZER, Tobias, 92421 Schwandorf (DE)
(74) Vertreter: Benninger, Johannes

(56) Entgegenhaltungen:
- EP-A1- 1 723 841
- DE-A1-102013 102 420
- DE-B4-102011 102 053
- DE-U1-202014 010 340
- FR-A1- 2 911 042

## Beschreibung

Die vorliegende Erfindung betrifft ein Scharsystem, insbesondere für die landwirtschaftliche Bodenbearbeitung mit den Merkmalen des Oberbegriffs des unabhängigen Anspruchs 1.

Scharspitzen können Bestandteil eines Scharsystems sein, welches Scharsystem insbesondere zur Bodenbearbeitung eingesetzt wird. Das Scharsystem kann sich aus einem Scharstiel, aus einem Leitblech und aus einer Scharspitze zusammensetzen. Der Scharstiel kann mittels geeigneter Befestigungsmittel an einem Rahmen einer landwirtschaftlichen Maschine angeordnet werden. Die Scharspitze kann hingegen am freien Ende des Scharstiels fixiert sein und so in einer abgesenkten Position des Scharstiels in den Boden eingreifen. Das Scharsystem, insbesondere die Scharspitze kann dazu dienen, den Boden aufzulockern.

Im Stand der Technik sind zahlreiche Ausgestaltungen einer Scharspitze bekannt. Die DE 20 2014 010 340 U1, EP1723841 A1 und die DE 10 2013 102 420 A1 offenbaren jeweils eine Scharspitze bzw. eine Werkzeugkombination mit einer Scharspitze. Die Scharspitze umfasst ein Basisteil, das an einem Schneidenträger eine Schneide aufweist. Mittels geeigneter Befestigungsmittel kann das Basisteil an einem Träger, insbesondere an einem Zinken, befestigt werden. Des Weiteren sind Leitelemente sowie Querträger in Form von Scharflügeln am Scharstiel vorgesehen.

Der Gegenstand der DE 20 2014 010 341 U1 offenbart ein Leitelement für eine landwirtschaftliche Bodenbearbeitungsmaschine mit einem Anschlussbereich zur Zuordnung des Leitelements an eine Scharspitze und mit einer ersten Schraubverbindung zur Befestigung des Leitelements an einem Träger. Das Leitelement weist zumindest bereichsweise entlang seiner von dem Anschlussbereich zu einem abgewandten Endbereich verlaufenden Längserstreckung eine variierende Dicke auf.

Der Gegenstand der DE 10 2011 102 053 B4 offenbart eine Schar oder eine Scharspitze für Bodenbearbeitungswerkzeuge. Die Scharspitze kann mittelbar oder unmittelbar mit einem Tragteil verbunden werden. Das Schar kann sich aus mindestens einem Schneidteil mit Schneide und aus einem Leitteil zusammensetzen, wobei die Schneide Bestandteil des Tragkörpers ist. Der Tragkörper kann mit dem Tragteil verbunden werden und als separates Scharteil ausgebildet sein, welches Tragteil dem Tragkörper lösbar zugeordnet ist.

Nachteilig ist, dass es sich bei den bekannten Gegenständen jeweils um ein sehr breites Schar handelt. So könnte während eines Bodenbearbeitungsprozesses unerwünscht Erde vermischt werden. Zugleich sind die Befestigungsmittel freiliegend und unterliegen daher einem hohen Verschleiß und sind folglich einer hohen Verschmutzungsgefahr ausgesetzt.

Ein Gerät zur Vorbereitung des Bodens für eine Reihensaat ist durch die DE 40 22 156 C1 bekannt. Als Bodenbearbeitungswerkzeug ist ein Untergrundlockerer offenbart. Der Untergrundlockerer weist eine in Fahrtrichtung nach vorne zeigende Keilspitze auf und besitzt gegenüber der Horizontalen einen Anstellwinkel von etwa 15°. Zur Auflockerung des Untergrundes bzw. der tiefer liegenden Bodenschichten ist der Untergrundlockerer mit zwei seitlich auskragenden, gleichfalls durch Flachmaterialzuschnitte gebildeten und mit dem Körper des Untergrundlockerers durch Schweißung starr verbundenen Flügeln versehen. Der Untergrundlockerer kann mittels einer Lochgruppe in einer gewissen Kipplage an einem Anschlussteil befestigt werden.

Beim Gegenstand der DE 40 22 156 C1 hat es sich als nachteilig erwiesen, dass bei Verschleißerscheinungen beispielsweise die nach vorne zeigenden Keilspitze des Untergrundlockerers im Gesamten ausgetauscht werden muss. Dies führt zu hohen Kosten bei der Instandhaltung und zu einem höheren Montage- und Teileaufwand.

Die EP 0 222 930 A1 offenbart einen Tiefenlockerer in Form von Einzelschare. Jede Schar ist auf einem Scharkörper aufgeschraubt, welcher Scharkörper vorne und hinten über die gesamte Arbeitsbreite Ausnehmungen umfasst. In diesen Ausnehmungen laufen Seile durch alle Scharkörper hindurch, wobei die Seile mit einem Ende an dem links außen angeordneten Stiel befestigt sind und mit dem anderen Ende in demjenigen Schar, das an dem rechts außen liegenden Stiel starr befestigt ist.

Nachteilig an diesen bekannten Systemen ist, dass sich der Zinken aus einer Vielzahl von Einzelteilen zusammensetzt, was einen erhöhten Teileaufwand und einen erhöhten Kostenaufwand zur Folge hat.

Der Erfindung liegt daher die Aufgabe zugrunde, ein Scharsystem zur Verfügung zu stellen, bei welchem die im Stand der Technik bekannten Nachteile zumindest teilweise überwunden werden können und tief gelockert werden kann, ohne Erde zu vermischen. Das Scharsystem soll zugleich einen unkomplizierten Aufbau besitzen, schmal ausgebildet sein und den Teileaufwand reduzieren.

Diese Aufgaben werden durch ein Scharsystem mit den Merkmalen des unabhängigen Anspruchs 1 gelöst. Weitere vorteilhafte Ausgestaltungen und Weiterbildungen der Erfindung sind in den jeweiligen abhängigen Ansprüchen beschrieben.

Es ist eine Scharspitze zur Verwendung in einem erfindungsgemäßen Scharsystem zur Bodenbearbeitung offenbart. Die Scharspitze weist zumindest einen eine Schneidkante aufweisenden ersten Bereich auf. Der erste Bereich kann an einem freien Ende der Scharspitze ausgebildet sein und sich zumindest bereichsweise entlang der Längserstreckungsrichtung der Scharspitze erstrecken.

Weiter umfasst die Scharspitze einen an den ersten Bereich anschließenden und eine Lauffläche aufweisenden zweiten Bereich. Der zweite Bereich kann sich in Längserstreckungsrichtung der Scharspitze erstrecken und dem ersten Bereich nachgeordnet sein. Der Übergang zwischen dem ersten Bereich und dem zweiten Bereich der Scharspitze kann fließend erfolgen.

Die Scharspitze weist einen dritten, an den zweiten Bereich anschließenden Befestigungsbereich auf. Der dritte Bereich kann sich in Längserstreckungsrichtung der Scharspitze erstrecken und dem zweiten Bereich nachgeordnet sein. Der Übergang zwischen dem zweiten Bereich und dem dritten Bereich der Scharspitze kann fließend erfolgen. Der Befestigungsbereich kann zumindest eine Ausnehmung, beispielsweise in Form von zumindest einer Bohrung umfassen. Die zumindest eine Ausnehmung kann zur Durchführung von zumindest einem Befestigungsmittel dienen, welches zumindest eine Befestigungsmittel zur Festsetzung der Scharspitze an dem Scharstiel sorgt, d.h. der Befestigungsbereich kann dazu dienen, die Scharspitze an einem freien Ende eines Scharstiels mittels zumindest eines Befestigungsmittels zu fixieren.

Die Scharspitze weist eine maximale Breite auf, welche zwischen dem einfachen und maximal dem doppelten der Breite eines Scharstiels entspricht, an welchem die Scharspitze montiert ist, d.h. die Breite der Scharspitze, insbesondere der Befestigungsbereich ausgebildete dritte Bereich kann eine Breite zwischen ein- bis zweimal einer Breite des Scharstiels entsprechen. Der als Befestigungsbereich ausgebildete dritte Bereich kann folglich eine maximale Breite der Scharspitze einnehmen.

Die Montage der Scharspitze an zumindest einem Abschnitt des Scharstiels kann bedeuten, dass die Scharspitze mittels des als Befestigungsbereichs ausgebildeten dritten Bereichs an einer Vorderseite des Scharstiels fixierbar ist.

Der Scharstiel kann dazu dienen, die an den Scharstiel fixierte Scharspitze einem Rahmen einer landwirtschaftlichen Maschine anzubinden. Hierzu kann der Scharstiel an einem Ende zumindest eine Ausnehmung aufweisen, so dass der Scharstiel mittels einer Befestigungseinheit am Rahmen einer landwirtschaftlichen Maschine fixiert werden kann. Die Anbindung des Scharstiels am Rahmen einer landwirtschaftlichen Maschine kann lösbar und/oder unlösbar ausgebildet sein. Als lösbare Verbindungen können beispielsweise Schraubverbindungen und/oder jegliche weitere Verbindungsmethoden verwendet werden. Die zumindest eine Ausnehmung an dem Rahmen zugewandten Ende des Scharstiels kann rund und/oder quadratisch und/oder dergleichen ausgebildet sein.

Der Scharstiel kann je nach Ausführungsform eine unterschiedliche Form ausbilden. Vorzugsweise kann sich der Scharstiel gebogen zum zu bearbeitenden Boden erstrecken, so dass der Scharstiel in Bezug auf den zu bearbeitenden Boden einen Winkel zwischen 7° bis 13°, vorzugsweise einen Winkel von 10°, einschließen kann. Der Scharstiel kann eine Breite zwischen 20 mm und 30 mm aufweisen. Vorzugsweise kann die Breite des Scharstiels 25 mm betragen.

Die Scharspitze zeichnet sich dadurch aus, dass der Befestigungsbereich derartig geformt ist, dass die Scharspitze zwischen einem dem Scharsystem zugeordneten Leitblech und einem Zinkenstiel montierbar ist. Dies kann bedeuten, dass eine Rückseite des als Befestigungsbereichs ausgebildeten dritten Bereichs an einem freien Ende des Scharstiels aufliegen kann, während auf der Vorderseite des als Befestigungsbereich ausgebildeten dritten Bereichs ein Leitblech aufliegen kann. Das Scharsystem kann durch einen Scharstiel, eine Scharspitze, einen Scharrücken und ein Leitblech gebildet werden.

Das Leitblech kann auf der Vorderseite eines Scharstiels fixiert sein. Die anliegende Fläche des Leitblechs auf der Vorderseite des Scharstiels kann korrespondierend zur Form des Scharstiels ausgebildet sein. Bei Montage des Leitblechs auf der Vorderseite des Scharstiels kann das Leitblech in Bezug auf den zu bearbeitenden Boden einen Winkel zwischen 100° und 108° einschließen. Vorzugsweise kann der Winkel zwischen dem Leitblech und dem zu bearbeitenden Boden 104° betragen. Es kann vorgesehen sein, dass das Leitblech eine Breite zwischen 20 mm und 40 mm aufweist. Vorzugsweise kann die Breite des Leitblechs 35 mm betragen.

Es kann vorgesehen sein, dass das Leitblech an einem Ende mindestens eine Aufnahmeeinheit umfasst, welche mindestens eine Aufnahmeeinheit der Breite des Scharstiels entspricht, d.h. die mindestens eine Aufnahmeeinheit kann den Scharstiel zumindest abschnittsweise aufnehmen und auf der Vorderseite des Scharstiels aufliegen. Folglich kann die mindestens eine Aufnahmeeinheit zwischen 20 mm und 30 mm, vorzugsweise 25 mm, breit sein. Am gegenüberliegenden Ende der mindestens einen Aufnahmeeinheit kann das Leitblech zumindest eine Rastnase umfassen, welche in eine korrespondierende Öffnung in Form einer Nut des als Befestigungsbereich ausgebildeten dritten Bereichs eingreifen kann. Damit ist die zumindest eine Rastnase dem als Befestigungsbereich ausgebildeten dritten Bereich zugewandt. Die zumindest eine Rastnase kann als quadratische oder zylindrische oder konische ausgebildete Erhebung ausgebildet sein. Denkbar wäre es auch, ein Leitblech ohne zumindest einer Rastnase auszubilden.

Die Fixierung des als Befestigungsbereichs ausgebildeten dritten Bereichs kann zwischen dem Leitblech und dem Scharstiel mittels einer wirkenden lösbaren Verbindung erfolgen. Die wirkende lösbare Verbindung kann insbesondere durch zumindest einem Befestigungsmittel erfolgen. Das zumindest eine Befestigungsmittel kann durch die zumindest eine Ausnehmung des Leitblechs des als Befestigungsbereich ausgebildeten dritten Bereichs und des Scharstiels geführt werden. Die zumindest eine Ausnehmung kann im Abschnitt des als Befestigungsbereich ausgebildeten dritten Bereichs vorgesehen sein, insbesondere am Scharstiel anliegenden Ende. Als Befestigungsmittel können Schraubverbindungen oder jegliche weitere lösbare Verbindungsmethoden eingesetzt werden. Die zumindest eine Ausnehmung kann zylindrisch, quadratisch und/oder konisch gebildet sein.

Die Fixierung des als Befestigungsbereich ausgebildeten dritten Bereichs kann mittels mehrerer Befestigungselementen erfolgen, insbesondere durch zumindest zwei Befestigungsmittel. Ein erstes der zumindest zwei Befestigungsmittel kann den als Befestigungsbereich ausgebildeten dritten Bereich mit dem Scharstiel verbinden, während ein zweites Befestigungsmittel das Leitblech und den als Befestigungsbereich ausgebildeten dritten Bereich an den Scharstiel anbinden.

Das erste Befestigungsmittel der zumindest zwei Befestigungsmittel kann im Bereich eines freien Endes des Scharstiels und das zweite Befestigungsmittel kann am anliegenden Ende des als Befestigungsbereich ausgebildeten dritten Bereichs am Scharstiel angeordnet sein. Diese Anordnung der zumindest zwei Befestigungsmittel kann dafür sorgen, dass die auf die Scharspitze und das Leitblech wirkenden Kräfte während eines Bodenbearbeitungsprozesses kompensieren können. Bodenbearbeitungsprozess kann bedeuten, dass der Scharspitze über den Scharstiel im Boden abgesenkt ist und der Boden gelockert wird. Dabei kann beim Lockern des Bodens im Boden selbst keine Erde an die Oberfläche transportiert werden kann.

In einer weiteren Ausführungsform können zumindest drei Befestigungsmittel zur Anbindung der Scharspitze an dem Scharstiel verwendet werden. Bei Verwendung von zumindest drei Befestigungsmittel können ein erstes und ein zweites der zumindest drei Befestigungsmittel den als Befestigungsbereich ausgebildeten dritten Bereich der Scharspitze mit dem Scharstiel und ein drittes Befestigungsmittel das Leitblech und den als Befestigungsbereich ausgebildeten dritten Bereich der Scharspitze mit dem Scharstiel verbinden. Die Anordnung der zumindest drei Befestigungsmittel kann so erfolgen, dass das erste Befestigungsmittel und das zweite Befestigungsmittel im Bereich eines freien Endes des Scharstiels angeordnet sind. Das erste Befestigungsmittel und das zweite Befestigungsmittel sind dabei zueinander beabstandet. Das dritte Befestigungsmittel kann am anliegenden Ende des als Befestigungsbereich ausgebildeten dritten Bereichs der Scharspitze angeordnet sein und kann zugleich zum ersten und zum zweiten Befestigungsmittel beabstandet sein.

Alternativ kann die wirkende Verbindung zwischen dem als Befestigungsbereich ausgebildeten dritten Bereich und des Scharstiels als auch zwischen dem Leitblech, dem als Befestigungsbereich ausgebildeten dritten Bereich und des Scharstiels unlösbar ausgebildet sein. Als Befestigungsmittel können form- und/oder stoffschlüssige Verbindungen, wie Nietverbindungen und/oder Schweißverbindungen und/oder Klebverbindungen, ggf. auch Hartlötverbindungen, eingesetzt werden. Bei der Verwendung von mehreren Befestigungsmitteln kann zumindest ein und/oder mehrere Befestigungsmittel unlösbar ausgebildet sein, während ein zweites und/oder mehrere Befestigungsmittel lösbar ausgebildet sein kann/können. Jegliche weitere Verbindungsmethoden zur Fixierung des als Befestigungsabschnitt ausgebildeten dritten Bereichs der Scharspitze und des Leitblechs an den Scharstiel sind denkbar.

Neben einem Leitblech und einer Scharspitze kann am Scharstiel ein Scharrücken vorgesehen sein, welcher auf der Rückseite des Scharstiels mittels wenigstens eines seitlich angeordneten weiteren Befestigungsmittels fixierbar ist. Der Scharrücken kann wenigstens eine Aufnahme umfassen, welche wenigstens Aufnahme sich durchgehend entlang der Längserstreckungsrichtung des Scharrückens erstrecken kann und welche wenigstens Aufnahme der Breite des Scharstiels entsprechen kann. Der Scharstiel kann folglich von der wenigstens einen Aufnahme des Scharrückens zumindest abschnittsweise aufgenommen werden. Danach kann die Form des Scharrückens zumindest näherungsweise der Form des Scharstiels entsprechen und in Bezug auf den zu bearbeitenden Boden gebogen ausgebildet sein. Der Scharrücken, insbesondere dessen Rückseite, kann in Bezug auf den zu bearbeitenden Boden relativ steil ausgebildet sein, so dass während eines Bodenbearbeitungsprozesses nur wenig Erde bewegt wird. Das Bewegen von wenig Erde während des Bodenbearbeitungsprozesses kann dadurch unterstützt werden, dass der Scharrücken auf der Rückseite des Scharstiels angeordnet ist und damit der Scharspitze in Bezug auf die Arbeitsrichtung nachgeordnet ist. Der Scharrücken kann durch bereits gelockerten Boden gleiten, was für einen geringeren Zugkraftbedarf sorgen kann. Der Scharrücken kann auf seiner Rückseite mindestens einen Kanal aufweisen, welcher sich längsgerichtet entlang der Form des Scharrückens erstrecken kann. Mittels des mindestens einen Kanals kann körniges und/oder flüssiges Gut, insbesondere Dünger in den Boden ausgebracht werden.

Eine Weiterbildung der Scharspitze kann in einer Weise ausgestaltet sein, dass der erste Bereich keilförmig gebildet ist und einen Winkel zwischen 25° und 45° einschließt. Die keilförmige Form des ersten Bereichs kann das Eindringen der Scharspitze in den Boden während des Bodenbearbeitungsprozesses erleichtern.

Es kann vorgesehen sein, dass dem ersten Bereich sowie zumindest abschnittsweise dem zweiten Bereich jeweils Verschleißelemente zugeordnet sind. Die Verschleißelemente können zum Schutz der Scharspitze dienen und bei Bedarf, insbesondere bei Verschleißerscheinungen, ausgetauscht werden. Alternativ kann bei Verschleißerscheinungen die Scharspitze im Gesamten ausgetauscht werden. Vorzugsweise können drei Verschleißelemente vorgesehen sein, welche sich über den ersten Bereich und zumindest abschnittsweise über den zweiten Bereich der Scharspitze erstrecken. Das erste und das zweite der drei Verschleißelemente können im ersten Bereich der Scharspitze und das dritte Verschleißelement kann im ersten Bereich und im zweiten Bereich der Scharspitze angeordnet sein. Die Verschleißelemente können aus wenigstens einem Stahl und/oder aus jeglichen weiteren verschleißbeständigen Materialien gebildet sein. Bevorzugtes Material der Verschleißelemente kann wenigstens ein Hartmetall sein. Dies kann bedeuten, dass die Scharspitze, insbesondere der erste Bereich und zumindest abschnittsweise der zweite Bereich der Scharspitze, mit Hartmetall bestückt sein kann/können.

Eine Ausführungsform der Scharspitze kann vorsehen, dass die Scharspitze zunächst in Bezug auf eine Arbeitsrichtung eine keilförmige Aufweitung aufweist, welche einen Winkel von 25° bis 45° einschließt, wobei an diesen wiederum eine keilförmige Aufweitung anschließt, welche einen Winkel zwischen 4° bis 8° einschließt, wobei wiederum an diese eine konische Verjüngung anschließt, welche einen Winkel zwischen 2° bis 6° einschließt.

Es kann vorgesehen sein, dass sich an die Verjüngung eine zumindest abschnittsweise bogenförmige Lauffläche anschließt. Die zumindest abschnittsweise bogenförmige Laufläche kann insbesondere im zweiten Bereich der Scharspitze angeordnet sein und einen Radius zwischen 80 mm und 120 mm einschließen. Vorzugsweise kann der Radius der zumindest abschnittsweisen bogenförmigen Lauffläche 100 mm betragen. Aufgrund der zumindest abschnittsweisen bogenförmigen Lauffläche kann sich die Scharspitze zumindest näherungsweise an die vorzugsweise gebogene Form des Scharstiels anpassen. Es hat sich als vorteilig erwiesen, je enger der Radius der zumindest abschnittsweisen bogenförmigen Lauffläche des zweiten Bereichs der Scharspitze gewählt ist, desto weniger Erde kann während des Bodenbearbeitungsprozesses aufgemischt werden.

Bei der Scharspitze kann weiter vorgesehen sein, dass dem Befestigungsbereich zumindest eine Bohrung zur Montage der Scharspitze an einen Zinkenstiel zugeordnet ist. Die zumindest eine Bohrung kann als Beispiel für zumindest eine Ausnehmung stehen. Die zumindest eine Ausnehmung kann rund und/oder eckig ausgebildet sein. Durch die zumindest eine Ausnehmung kann zumindest ein Befestigungsmittel zur Fixierung des als Befestigungsbereich ausgebildeten dritten Bereichs der Scharspitze mit dem Leitblech an dem Scharstiel erfolgen.

Es kann vorgesehen sein, dass die zumindest eine Bohrung im montierten Zustand von einem Leitblech überdeckt wird. Das Leitblech kann damit zum Schutz des zumindest einen Befestigungsmittels beitragen, welches durch die zumindest eine Bohrung bzw. durch die zumindest eine Ausnehmung geführt wird. Je nach Anzahl der Befestigungsmittel und je nach Anzahl der Ausnehmungen können entsprechend mehr und/oder weniger Befestigungsmittel vom Leitblech überdeckt werden. So wäre es denkbar, dass bei zumindest zwei Befestigungsmittel ein Befestigungsmittel oder beide Befestigungsmittel vom Leitblech überdeckt werden können. Aufgrund der Überdeckung des zumindest einen Befestigungsmittels mittels des Leitblechs kann dieses vor Verschleiß und Verschmutzungen geschützt werden.

Gemäß einem Ausführungsbeispiel kann vorgesehen sein, dass der erste und der zweite Bereich zusammen eine Länge aufweisen, welche wenigstens dem Fünffachen der Breite der Schneidkante entspricht. Eine Summe der Länge des ersten und des zweiten Bereichs der Scharspitze kann 200 mm bis 260 mm, vorzugsweise 230 mm, und die Breite der Schneidkante kann 20 mm bis 30 mm, vorzugsweise 25 mm, betragen.

Es kann vorgesehen sein, dass eine Länge der Scharspitze, insbesondere unter Berücksichtigung der Länge des ersten Bereichs, des zweiten Bereichs und des dritten Bereichs der Scharspitze, und die Breite des Leitblechs im Verhältnis von sieben zu eins stehen.

Es kann vorgesehen sein, dass die Schneidkante der schmalste Abschnitt dieser ist, und der Befestigungsbereich eine Breite aufweist, welche wenigstens um ein Fünftel breiter als diese ist. Danach kann der als Schneidkante ausgebildete erste Bereich der Scharspitze eine Breite von 20 mm bis 30 mm, vorzugsweise eine Breite von 25 mm, aufweisen und der als Befestigungsbereich ausgebildete dritte Bereich kann eine Breite von 30 mm bis 40 mm aufweisen. Bevorzugte Breite des als Schneidkante ausgebildeten ersten Bereichs kann 25 mm und eine bevorzugte Breite des als Befestigungsbereichs ausgebildeten dritten Bereichs kann 35 mm betragen.

Aufgrund solcher Längen- und Breitenverhältnisse der Scharspitze kann der zu bearbeitende Boden während eines Bodenbearbeitungsprozesses mit wenig Erdbewegung tief gelockert werden. Zugleich kann ein sehr schmales Schar umgesetzt werden.

Es kann vorgesehen sein, dass die Scharspitze rückseitig einen Freiwinkel in Bezug auf einen zu bearbeitenden Boden aufweist, welcher Freiwinkel zwischen 4° und 8° oder zwischen 5° und 7° liegt. Vorzugsweise kann der Freiwinkel der Scharspitze einen Wert von 6° aufweisen. Danach kann die Scharspitze schräg zu dem zu bearbeitenden Boden bzw. im Boden verlaufen. Durch die Ausbildung eines Freiwinkels kann die Scharspitze effektiver in den Boden eingreifen. Zugleich kann die Scharspitze mit weniger Kraftaufwand während des Bodenbearbeitungsprozesses in den Boden eindringen und im Boden geführt werden, so dass Verschleißerscheinungen an der Scharspitze reduziert werden können.

Es sei an dieser Stelle betont, dass sich alle Aspekte, Ausführungsvarianten, alle optionalen und/oder alternativen Gestaltungen und/oder Gestaltungsmerkmale der zuvor beschriebenen Scharspitze und ihrer Wirkungsweise ebenso auf das nachfolgend in verschiedenen Varianten beschriebene erfindungsgemäße Scharsystem beziehen können. Wenn also zuvor teilweise bzw. vorrangig von der Scharspitze die Rede war, so beziehen sich alle in diesem Zusammenhang gemachten Aussagen gleichermaßen auf das Scharsystem. Gleiches gilt auch umgekehrt, so dass sich alle Aspekte, Ausführungsvarianten, alle optionalen und/oder alternativen Gestaltungen und/oder Gestaltungsmerkmale des nachfolgend beschriebenen erfindungsgemäßen Scharsystems und seiner Wirkungsweise und Einsatzmöglichkeiten ebenso auf die zuvor in verschiedenen Varianten beschriebene Scharspitze beziehen können. Wenn also nachfolgend teilweise bzw. vorrangig von einem Scharsystem die Rede sein wird, so beziehen sich alle in diesem Zusammenhang gemachten Aussagen gleichermaßen auf die Scharspitze.

Zur Lösung der oben genannten Aufgaben schlägt die Erfindung ein Scharsystem mit den Merkmalen des unabhängigen Anspruchs 1 vor, welches Scharsystem insbesondere im Zusammenhang mit einer landwirtschaftlichen Bodenbearbeitung eingesetzt werden kann bzw. welches Scharsystem hierfür besonders geeignet ist. Das erfindungsgemäße Scharsystem umfasst wenigstens einen Scharstiel, eine lösbar an diesem Scharstiel montierte bzw. montierbare Scharspitze und zumindest ein Leitblech und/oder weitere damit zusammenwirkende und/oder in Wechselwirkung stehende Komponenten. Auch das Leitblech und/oder die weiteren Komponenten sind lösbar am Scharstiel montiert bzw. montierbar, wobei vorzugsweise gleichzeitig die Scharspitze mitmontiert wird, wenn das Leitblech am Scharstiel befestigt, fixiert bzw. montiert wird. Bei dem erfindungsgemäßen Scharsystem ist weiterhin vorgesehen, dass die Scharspitze einen ersten Bereich aufweist, der eine Schneidkante oder ggf. mehrere Schneidkanten aufweist. Ein sich in Längserstreckungsrichtung an den ersten Bereich anschließender zweiter Bereich weist eine Lauffläche auf. Schließlich umfasst die Scharspitze noch einen dritten Bereich, der sich an den zweiten Bereich anschließt, und der einen Befestigungsbereich bildet. Wenn in diesem Zusammenhang von den sich aneinander anschließenden Bereichen die Rede ist, so ist damit in erster Linie eine räumliche Aufeinanderfolge bzw. Aneinanderreihung in Längserstreckungsrichtung der Scharspitze gemeint, was jedoch keineswegs ausschließt, dass die eher funktionell beschriebenen bzw. bezeichneten drei Bereiche auch teilweise ineinander übergehen bzw. sich teilweise überdecken.

Die Scharspitze weist quer zu ihrer Längserstreckungsrichtung eine maximale Breite auf, welche zwischen dem einfachen und maximal dem doppelten der Breite des Scharstiels entspricht, an dem die Scharspitze lösbar montiert ist. Weiterhin ist vorgesehen, dass der Befestigungsbereich der Scharspitze zwischen dem, dem Scharsystem zugeordneten Leitblech und dem Scharstiel lösbar montiert ist. Wie erwähnt, können sich bei dem erfindungsgemäßen Scharsystem der erste Bereich mit der wenigstens einen Schneidkante, der zweite Bereich, der die Lauffläche aufweist und/oder bildet, sowie der dritte Bereich, der den Befestigungsbereich der Scharspitze bildet, in Längserstreckungsrichtung der Scharspitze aneinander anschließen.

Erfindungsgemäß ist vorgesehen, dass der erste und der zweite Bereich zusammen eine Länge aufweisen, welche wenigstens dem Fünffachen der Breite der Schneidkante entspricht. Eine Summe der Länge des ersten Bereichs und des zweiten Bereichs der Scharspitze kann 200 mm bis 260 mm, vorzugsweise 230 mm, und die Breite der Schneidkante kann 20 mm bis 30 mm, vorzugsweise 25 mm, betragen.

Weiterhin sieht eine optionale Ausführungsvariante des erfindungsgemäßen Scharsystems vor, dass der den Befestigungsbereich der Scharspitze bildende dritte Bereich in einer Richtung quer zur Längserstreckungsrichtung der Scharspitze zwischen einem Abschnitt des Leitblechs und einem Abschnitt des Scharstiels geklemmt und/oder lösbar fixiert ist. Damit kann insbesondere eine sandwichartige Klemmung des Befestigungsabschnittes bzw. Befestigungsbereichs der Scharspitze zwischen einem freien Endabschnitt bzw. korrespondierenden Befestigungs- und/oder Stützabschnitt des Scharstiels und/oder Zinkenstiels und einem Befestigungsbereich des Leitblechs gemeint sein, so dass diese drei Teile übereinanderliegend aneinander fixiert sind, wobei diese Fixierung erfindungsgemäß lösbar ausgebildet ist, was etwa durch Verwendung von Verschraubungen oder andere geeignete Befestigungsmittel erreicht werden kann.

Weiterhin kann bei dem erfindungsgemäßen Scharsystem vorgesehen sein, dass die Scharspitze und/oder der Scharstiel und/oder das Leitblech zumindest abschnittsweise in Längserstreckungsrichtung einem bogenförmigen oder sichelförmigen Verlauf folgen.

Wie schon erwähnt, können die sich in Längserstreckung aneinander anschließenden bzw. aneinander grenzenden Bereiche in fließenden bzw. nicht exakt voneinander abgrenzbaren Übergängen miteinander verbunden sein, was normalerweise eine einstückige Bauweise meint, bei der die verschiedenen Teile jedoch unterschiedliche mechanische Eigenschaften aufweisen können, die bspw. durch unterschiedliche spezifische Wärmebehandlungen definiert und beeinflusst sein können. Allerdings ist damit nicht ausgeschlossen, dass die Scharspitze durch mehrere zusammengefügte Teile gebildet ist, die bspw. miteinander verschweißt sein können. Der erwähnte Befestigungsbereich, der die lösbare Fixierung der Scharspitze am Zinkenstiel bzw. am freien unteren Ende des Scharstiels ermöglicht, kann zumindest eine Ausnehmung, beispielsweise in Form von zumindest einer Bohrung umfassen. Die zumindest eine Ausnehmung kann zur Durchführung von zumindest einem Befestigungsmittel dienen, welches zumindest eine Befestigungsmittel zur Festsetzung der Scharspitze an dem Scharstiel sorgt, d.h. der Befestigungsbereich kann dazu dienen, die Scharspitze an einem freien Ende eines Scharstiels mittels zumindest eines Befestigungsmittels zu fixieren. Als Befestigungsmittel können insbesondere herkömmliche Gewindeschrauben, ggf. unter Verwendung von Gewindemuttern und/oder von in die Bauteile eingearbeiteten Gewinden, dienen. Allerdings sind auch andere Befestigungsmittel denkbar, bspw. Nietverbindungen, Hartlöt- und/oder Schweißverbindungen etc. Die Montage der Scharspitze an zumindest einem Abschnitt des Scharstiels meint normalerweise die Fixierung der Scharspitze mittels des als Befestigungsbereichs ausgebildeten dritten Bereichs an einer Vorderseite des Scharstiels, was auf die beschriebene Weise mittels leicht lösbaren oder auch mittels nur schwer wieder lösbaren Verbindungsarten erfolgen kann.

Die Scharspitze weist eine maximale Breite in Richtung ihres Querschnittes auf, welche zwischen der einfachen und maximal der doppelten Breite eines typischen Scharstiels entspricht, an welchem die Scharspitze montiert ist, d.h. die Breite der Scharspitze, insbesondere der Befestigungsbereich ausgebildete dritte Bereich kann eine Breite zwischen ein- bis zweimal einer Breite des Scharstiels entsprechen. Der als Befestigungsbereich ausgebildete dritte Bereich kann folglich eine maximale Breite der Scharspitze einnehmen. Der Scharstiel ist normalerweise Bestandteil einer landwirtschaftlichen Maschine, bspw. einer Bodenbearbeitungsmaschine, die eine Vielzahl gleichartiger Scharstiele mit jeweils daran lösbar fixierten Scharspitzen umfasst. Der wenigstens eine Scharstiel bzw. die Vielzahl von Scharstielen kann bspw. mittels einer geeigneten Befestigung am Rahmen der hier nicht näher spezifizierten landwirtschaftlichen Maschine fixiert sein. Diese Anbindung des Scharstiels am Rahmen der landwirtschaftlichen Maschine kann wahlweise lösbar, ggf. werkzeuglos lösbar oder auch unlösbar ausgebildet sein. Als lösbare Verbindungen kommen bspw. Schraubverbindungen o. dgl. in Frage. Die zumindest eine Ausnehmung an einem dem Rahmen zugewandten Ende des Scharstiels kann rund und/oder quadratisch und/oder dergleichen ausgebildet sein.

Der Scharstiel mit oder ohne daran fixierter Scharspitze kann je nach Ausführungsform unterschiedlich geformt sein, bspw. bogenförmig, sichelförmig etc. Vorzugsweise kann sich der Scharstiel gebogen zum zu bearbeitenden Boden erstrecken, so dass der Scharstiel in Bezug auf den zu bearbeitenden Boden einen Winkel zwischen 7° bis 13°, vorzugsweise einen Winkel von 10°, einschließen kann. Der Scharstiel kann eine Breite zwischen 20 mm und 30 mm aufweisen. Vorzugsweise kann die Breite des Scharstiels 25 mm betragen. Wenn in diesem Zusammenhang von einem bogenförmigen oder sichelförmigen Scharstiel die Rede ist, so ist dieser Bogen mit seiner konkaven Seite zur Fahrtrichtung gewandt, so dass sich die nach vorne gerichtete Scharspitze in den Boden graben und diesen in gewünschter Weise aufreißen und/oder lockern kann.

Bei der Scharspitze ist der mit dem Scharstiel verbindbare Befestigungsbereich in einer Weise geformt, dass die Scharspitze zwischen einem dem Scharsystem zugeordneten Leitblech und einem Zinkenstiel bzw. dem Scharstiel montierbar ist. Dies kann bedeuten, dass eine Rückseite des als Befestigungsbereichs ausgebildeten dritten Bereichs des oberen Endes - dies ist das vom Boden abgewandte Ende der Scharspitze - an einem nach unten in Richtung zum Boden weisenden freien Ende des Scharstiels aufliegen kann, während auf der Vorderseite des als Befestigungsbereich ausgebildeten dritten Bereichs der Scharspitze ein Leitblech aufliegen kann. D.h., ein Teil der Rückseite des Leitblechs kann flächig auf der Oberseite des dritten Bereichs der Scharspitze anliegen bzw. dort aufliegen. Auf diese Weise wird deutlich, dass das erfindungsgemäße Scharsystem zumindest durch den beschriebenen Scharstiel, die beschriebene Scharspitze, einen Scharrücken und das erwähnte Leitblech gebildet sein kann.

Wie erwähnt, kann das Leitblech, das einen Bestandteil des Scharsystems bildet, auf der Vorderseite des Scharstiels fixiert sein. Die auf der Vorderseite des Scharstiels anliegende Fläche des Leitblechs kann insbesondere korrespondierend zur Form des Scharstiels ausgebildet sein, so dass sich vorzugsweise eine flächige Anlage der beiden Teile ergibt, wenn diese aneinander fixiert bzw. miteinander verbunden sind. Bei Montage des Leitblechs auf der Vorderseite des Scharstiels kann das Leitblech in Bezug auf den zu bearbeitenden Boden einen Winkel zwischen 100° und 108° einschließen. Vorzugsweise kann der Winkel zwischen dem Leitblech und dem zu bearbeitenden Boden 104° betragen. In einer sinnvollen Ausführungsvariante kann vorgesehen sein, dass das Leitblech eine Breite zwischen etwa 20 mm und etwa 40 mm aufweist. Als sinnvolle Breite hat sich ein Maß von etwa 35 mm für die Breite des Leitblechs erwiesen.

Weiterhin kann das Leitblech an einem Ende mit einer Aufnahmeeinheit mit einer Breite im Bereich der Breite des Scharstiels ausgestattet sein. D.h., die Aufnahmeeinheit kann den Scharstiel zumindest abschnittsweise aufnehmen und auf der Vorderseite des Scharstiels aufliegen. Daraus ergibt sich ein sinnvolles Breitenmaß für die Aufnahmeeinheit von etwa mindestens 20 mm bis zu etwa 30 mm, vorzugsweise von etwa 25 mm. Am gegenüberliegenden Ende der mindestens einen Aufnahmeeinheit kann das Leitblech bspw. eine Rastnase aufweisen, welche in eine korrespondierende Öffnung in Form einer Nut des als Befestigungsbereich ausgebildeten dritten Bereichs eingreifen kann. Damit ist die zumindest eine Rastnase dem als Befestigungsbereich ausgebildeten dritten Bereich zugewandt. Die zumindest eine Rastnase kann als quadratische oder zylindrische oder konische ausgebildete Erhebung ausgebildet sein. Denkbar wäre es auch, ein Leitblech ohne eine solche Rastnase auszubilden.

Die Fixierung zwischen dem als Befestigungsbereich ausgebildeten dritten Bereich der Scharspitze, dem Leitblech und dem Scharstiel kann vorzugsweise mittels einer lösbaren Verbindung oder mehreren Verbindungsmitteln bzw. durch Befestigungsmittel erfolgen. Das oder die Befestigungsmittel kann/können bspw. durch die zumindest eine Ausnehmung des Leitblechs des als Befestigungsbereich ausgebildeten dritten Bereichs und des Scharstiels geführt sein. Die zumindest eine Ausnehmung kann im Abschnitt des als Befestigungsbereich ausgebildeten dritten Bereichs vorgesehen sein, insbesondere am Scharstiel anliegenden Ende. Als Befestigungsmittel können Schraubverbindungen oder jegliche weitere lösbare Verbindungsmethoden eingesetzt werden. Die zumindest eine Ausnehmung kann bspw. zylindrisch, quadratisch und/oder konisch ausgebildet oder ggf. auch anders geformt sein. Die Fixierung des als Befestigungsbereich ausgebildeten dritten Bereichs kann mittels mehrerer Befestigungselemente erfolgen, insbesondere durch zumindest zwei Befestigungsmittel. Ein erstes der zumindest zwei Befestigungsmittel kann bspw. den als Befestigungsbereich ausgebildeten dritten Bereich mit dem Scharstiel verbinden, während ein zweites Befestigungsmittel das Leitblech und den als Befestigungsbereich ausgebildeten dritten Bereich an den Scharstiel anbinden bzw. aneinander fixieren kann.

Das erste Befestigungsmittel der zumindest zwei Befestigungsmittel kann im Bereich eines freien Endes des Scharstiels und das zweite Befestigungsmittel kann am anliegenden Ende des als Befestigungsbereich ausgebildeten dritten Bereichs am Scharstiel angeordnet sein. Diese Anordnung der zumindest zwei Befestigungsmittel kann dafür sorgen, dass die auf die Scharspitze und das Leitblech wirkenden Kräfte während eines Bodenbearbeitungsprozesses kompensieren bzw. aufnehmen können. Wenn im vorliegenden Zusammenhang von einer Bodenbearbeitung die Rede ist, so kann dies insbesondere bedeuten, dass die Scharspitze über den Scharstiel in den Boden abgesenkt ist, in den Boden eingreift und somit durch eine - normalerweise in etwa geradlinig verlaufende - Vorschubbewegung der landwirtschaftlichen Maschine bzw. des Bodenbearbeitungsgerätes der Boden gelockert wird. Normalerweise stellt diese Art der Bodenbearbeitung keine wendende Bodenbearbeitung dar, sondern eine lockernde bzw. furchende Bodenbearbeitung.

Neben dem erwähnten Leitblech und der beschriebenen, für die Bodenbearbeitung unverzichtbaren Scharspitze kann der Scharstiel einen sog. Scharrücken umfassen, welcher auf der Rückseite des Scharstiels mittels wenigstens eines seitlich angeordneten weiteren Befestigungsmittels fixierbar ist. Der Scharrücken kann wenigstens eine Aufnahme umfassen, welche wenigstens Aufnahme sich durchgehend entlang der Längserstreckungsrichtung des Scharrückens erstrecken kann und welche wenigstens Aufnahme der Breite des Scharstiels entsprechen kann. Der Scharstiel kann folglich von der wenigstens einen Aufnahme des Scharrückens zumindest abschnittsweise aufgenommen werden. Danach kann die Form des Scharrückens zumindest näherungsweise der Form des Scharstiels entsprechen und in Bezug auf den zu bearbeitenden Boden gebogen ausgebildet sein. Der Scharrücken, insbesondere dessen Rückseite, kann in Bezug auf den zu bearbeitenden Boden relativ steil ausgebildet sein, so dass während eines Bodenbearbeitungsprozesses nur wenig Erde bewegt wird. Das Bewegen von wenig Erde während des Bodenbearbeitungsprozesses kann dadurch unterstützt werden, dass der Scharrücken auf der Rückseite des Scharstiels angeordnet ist und damit der Scharspitze in Bezug auf die Arbeitsrichtung nachgeordnet ist. Der Scharrücken kann durch bereits gelockerten Boden gleiten, was für einen geringeren Zugkraftbedarf sorgen kann. Der Scharrücken kann auf seiner Rückseite mindestens einen Kanal aufweisen, welcher sich längsgerichtet entlang der Form des Scharrückens erstrecken kann. Mittels des mindestens einen Kanals kann körniges und/oder flüssiges Gut, insbesondere Dünger in den Boden ausgebracht werden.

Eine Weiterbildung der Erfindung kann vorsehen, dass der erste Bereich keilförmig in Form einer Spitze ausgebildet ist, wobei diese Spitze typischerweise einen Winkel zwischen etwa 25° und etwa 45° einschließen kann. Diese keilförmige bzw. in der Seitenansicht spitze Form des ersten Bereichs kann das Eindringen der Scharspitze in den Boden während des Bodenbearbeitungsprozesses erleichtern. Selbstverständlich umfasst der Begriff der keilförmigen bzw. spitzen Form zahlreiche Querschnittsvarianten der Scharspitze, die bspw. in der Seitenansicht bzw. im Längsschnitt die erwähnte Spitze aufweisen kann, während jedoch der Querschnitt wahlweise quaderförmig, oval, rund oder rechteckförmig mit abgerundeten oder scharfen Kanten ausgebildet sein kann. Nach vorne hin, d.h. zur keilförmigen Spitze, kann sich dieser Querschnitt bspw. in der Höhe reduzieren, während die Breite weitgehend konstant bleiben kann.

Außerdem kann es von Vorteil sein, sowohl dem ersten Bereich sowie zumindest abschnittsweise dem zweiten Bereich jeweils Verschleißelemente zuzuordnen, die wahlweise austauschbar bzw. nach Erreichen einer definierbaren Verschleißgrenze entfernbar und durch neue Verschleißelemente ersetzbar sein können. Diese Verschleißelemente können in erster Linie dem Schutz der Scharspitze dienen und bei Bedarf, insbesondere bei aufgetretenen stärkeren Verschleißerscheinungen, ausgetauscht werden. Alternativ kann bei Verschleißerscheinungen die Scharspitze als Ganzes ausgetauscht werden. Vorzugsweise können drei oder mehr Verschleißelemente vorgesehen sein, welche sich über den ersten Bereich und zumindest abschnittsweise über den zweiten Bereich der Scharspitze erstrecken. Das erste und das zweite der drei Verschleißelemente können im ersten Bereich der Scharspitze und das dritte Verschleißelement kann im ersten Bereich und im zweiten Bereich der Scharspitze angeordnet sein. Die Verschleißelemente können aus wenigstens einem Stahl und/oder aus jeglichen weiteren verschleißbeständigen Materialien gebildet sein. Bevorzugtes Material der Verschleißelemente kann wenigstens ein Hartmetall sein. Dies kann bedeuten, dass die Scharspitze, insbesondere der erste Bereich und zumindest abschnittsweise der zweite Bereich der Scharspitze, mit Hartmetall bestückt sein kann/können. Wenn in diesem Zusammenhang von Verschleißelementen die Rede ist, so können dies insbesondere aufgesetzte Elemente sein, die den abrasiven Effekten beim Durchschneiden des Ackerbodens einen gewissen Widerstand und/oder einen definierten, materialabtragenden Effekt entgegensetzen.

Eine Ausführungsform der Erfindung kann vorsehen, dass die Scharspitze zunächst in Bezug auf eine Arbeitsrichtung - damit ist in der Regel die Ansicht im Längsschnitt gemeint - eine keilförmige Aufweitung aufweist, welche einen Winkel von etwa 25° bis etwa 45° einschließt, wobei an diesen wiederum eine keilförmige Aufweitung anschließt, welche einen Winkel zwischen etwa 4° bis etwa 8° einschließen kann, wobei wiederum an diese eine konische Verjüngung anschließt, welche einen Winkel zwischen etwa 2° bis etwa 6° einschließen kann. Diese Winkelmaße sind zwar beispielhaft zu verstehen, haben sich in der Praxis jedoch als besonders vorteilhaft für die bevorzugten Einsatzzwecke des Scharsystems als auch hinsichtlich der Widerstandskraft des Scharsystems gegen Verschleißerscheinungen herausgestellt, so dass sie als besonders vorteilhaft gelten können.

Bei dem erfindungsgemäßen Scharsystem kann weiterhin vorgesehen sein, dass dem Befestigungsbereich zumindest eine Bohrung zur Montage der Scharspitze an einen Zinkenstiel bzw. an den Scharstiel zugeordnet ist. Die zumindest eine Bohrung kann als Beispiel für zumindest eine Ausnehmung, einen Durchbruch o. dgl. stehen. Die zumindest eine Ausnehmung, die Bohrung oder der Durchbruch kann/können rund und/oder eckig ausgebildet sein. Durch die zumindest eine Ausnehmung kann zumindest ein Befestigungsmittel zur Fixierung des als Befestigungsbereich ausgebildeten dritten Bereichs der Scharspitze mit dem Leitblech an dem Scharstiel erfolgen.

Es kann vorgesehen sein, dass die zumindest eine Bohrung im montierten Zustand von einem Leitblech überdeckt wird. Das Leitblech kann damit zum Schutz des zumindest einen Befestigungsmittels beitragen, welches durch die zumindest eine Bohrung bzw. durch die zumindest eine Ausnehmung geführt wird. Je nach Anzahl der Befestigungsmittel und je nach Anzahl der Ausnehmungen können entsprechend mehr und/oder weniger Befestigungsmittel vom Leitblech überdeckt werden. So wäre es denkbar, dass bei zumindest zwei Befestigungsmittel ein Befestigungsmittel oder beide Befestigungsmittel vom Leitblech überdeckt werden können. Aufgrund der Überdeckung des zumindest einen Befestigungsmittels mittels des Leitblechs kann dieses vor Verschleiß und Verschmutzungen geschützt werden. Damit dient das Leitblech nicht nur als Funktionselement beim bestimmungsgemäßen Einsatz des Scharsystems, da es als erdleitendes Element fungiert. Gleichzeitig bildet das Leitblech eine Schutzabdeckung für die Befestigungsmittel und/oder als Abweiserelement, um deren Verschleiß, insbesondere durch abrasive Erscheinungen zu reduzieren.

Aufgrund solcher Längen- und Breitenverhältnisse der Scharspitze kann der zu bearbeitende Boden während eines Bodenbearbeitungsprozesses mit wenig Erdbewegung tief gelockert werden. Zugleich kann das Schar sehr schmal ausgeführt sein, was die aufzubringenden Zugkräfte für die Bodenlockerung reduziert und damit zu einer erwünschten Kraftstoffersparnis beiträgt. Auch die weitere oben erwähnte Ausbildung und Dimensionierung eines Freiwinkels trägt dazu bei, dass die Scharspitze effektiver in den Boden eingreifen kann. Zugleich kann die Scharspitze mit weniger Kraftaufwand während des Bodenbearbeitungsprozesses in den Boden eindringen und im Boden geführt werden, so dass Verschleißerscheinungen an der Scharspitze reduziert werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Die Figuren 1A und 1b zeigen eine Scharspitze in einer Seitenansicht und in einer Schnittdarstellung.

Figur 2 zeigt eine Schnittdarstellung der Scharspitze im montierten Zustand an einem Scharstiel.

Figur 3 zeigt die Scharspitze im montieren Zustand an einem Scharstiel in einer Perspektivansicht.

Figur 4 zeigt das Leitblech in einer Perspektivansicht.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

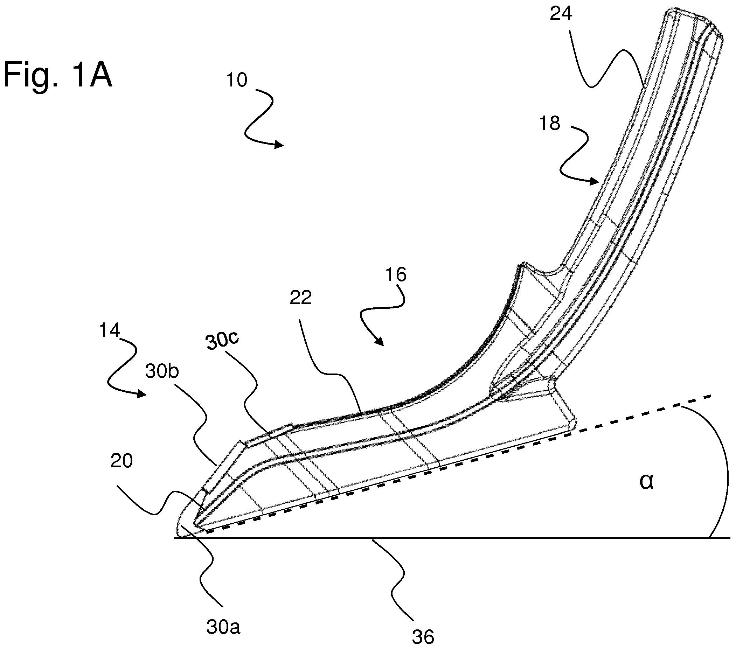

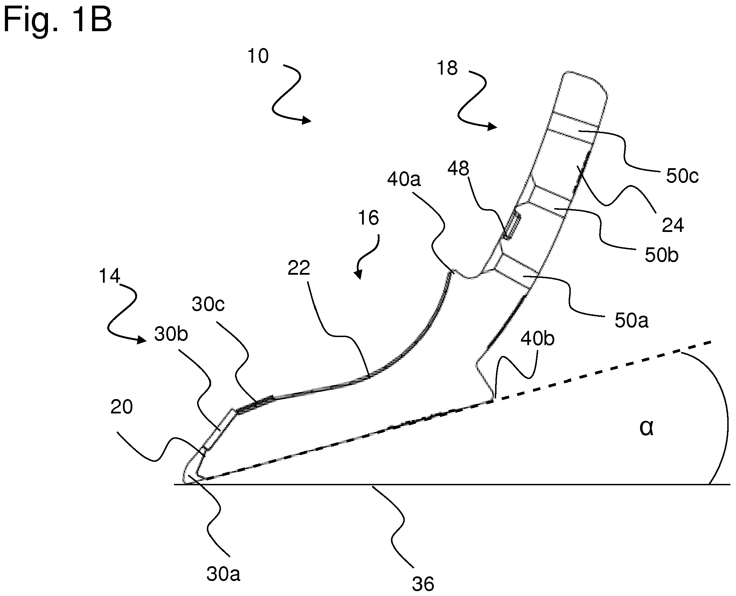

Die Figuren 1A und 1B zeigen die Scharspitze 10 in einer Seitenansicht und in einer Schnittdarstellung. Die Scharspitze 10 umfasst drei Bereiche. Ein erster Bereich 14 weist eine Schneidkante 20 auf, welche an einem freien Ende in Längserstreckungsrichtung der Scharspitze 10 angeordnet ist. Die Schneidkante 20 stellt den schmalsten Abschnitt der Scharspitze 10 dar und weist in der Figur 1 eine Breite zwischen 20 mm bis 30 mm, vorzugsweise von 25 mm, auf. Der erste Bereich 14 und damit auch die Schneidkante 20 bilden eine keilförmige Form aus und schließen einen Winkel zwischen 25° und 45° ein. Die keilförmige Form des ersten Bereichs 14 sorgt dafür, dass die Scharspitze leichter in den Boden während des Bodenbearbeitungsprozesses eindringen kann.

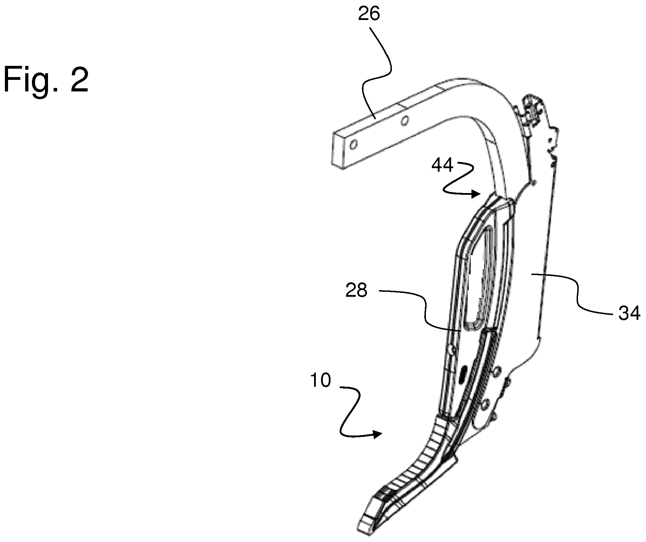

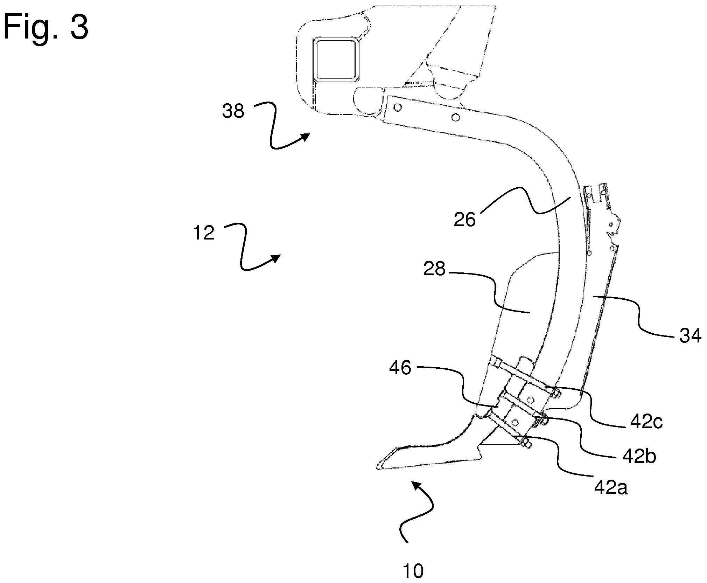

Ein zweiter Bereich 16 schließt sich in Längserstreckungsrichtung der Scharspitze 10 an den ersten Bereich 14 an und ist diesem nachgeordnet. Der zweite Bereich 16 weist eine Lauffläche 22 auf. Die Lauffläche 22 kann zumindest abschnittsweise bogenförmig ausgebildet sein und einen Radius zwischen 80 mm und 120 mm einschließen. Vorzugsweise kann der Radius einen Wert von 100 mm betragen. Der zweite Bereich 16 schließt mit einer Erhebung am Ende der zumindest abschnittsweisen bogenförmigen Lauffläche 22 auf der Vorderseite der Scharspitze 10 ab, welche Erhebung eine erste Hinterschneidung 40a ausbildet. In die erste Hinterschneidung 40a greift ein korrespondierendes Ende des Leitblechs 28 (hier nicht dargestellt) im montierten Zustand der Scharspitze 10 an einem Scharstiel 26 (vgl. Figur 2 und Figur 3) ein. Auf der Rückseite der Scharspitze 10 ist eine zweite Hinterschneidung 40b vorgesehen, in welche im montierten Zustand der Scharspitze 10 an einem Scharstiel 26 das freie Ende des Scharstiels 26 korrespondierend anliegen kann.

Die Länge des ersten Bereichs 14 und des zweiten Bereichs 16 der Scharspitze 26 beträgt in Summe 200 mm bis 260 mm, vorzugsweise 230 mm. Damit entspricht die Summe der Längen des ersten Bereichs 14 und des zweiten Bereichs 16 wenigstens dem Fünffachen der Breite der Schneidkante 20.

Die Scharspitze 10 kann in einen dritten Bereich 18 eingeteilt werden, welcher sich in Längserstreckungsrichtung der Scharspitze 10 an den zweiten Bereich 16 anschließt. Der dritte Bereich 18 der Scharspitze 10 bildet einen Befestigungsbereich 24 aus. Der als Befestigungsbereich 24 ausgebildete dritte Bereich 18 umfasst zumindest drei Ausnehmungen 50a, 50b, 50c, welche zueinander beabstandet sind. In die zumindest drei Ausnehmung 50a, 50b, 50c kann jeweils ein Befestigungsmittel der zumindest drei Befestigungsmittel (hier nicht dargestellt) geführt werden, so dass die Scharspitze 10 mittel des als Befestigungsbereich 24 ausgebildeten dritten Bereichs 18 zumindest abschnittsweise an einem Scharstiel 26 (hier nicht dargestellt) festgesetzt werden kann. Die Form des als Befestigungsbereich 24 ausgebildeten dritten Bereichs 18 ist zumindest abschnittsweise bogenförmig gebildet und schließt einen Radius von 565 mm und 585 mm, vorzugsweise von 575 mm ein. Der als Befestigungsbereich 24 ausgebildete dritte Bereich 18 weist eine Breite auf, welche wenigstens um ein Fünftel breiter als die Scharspitze 10 ist. Danach misst die Breite des als Befestigungsbereich 24 ausgebildeten dritten Bereichs 18 zwischen 30 mm und 40 mm, vorzugsweise 35 mm.

Dem ersten Bereich 14 und zumindest abschnittsweise dem zweiten Bereich 16 der Scharspitze 10 sind Verschleißelemente 30 zugeordnet. Ein erstes Verschleißelement 30a ist im ersten Bereich 14 der Scharspitze 20 angeordnet und bildet eine Hinterschneidung aus, wobei die Hinterschneidung korrespondierend zur Form der Schneidkante 20 ausgebildet ist. Das erste Verschleißelement 30a ist L-förmig ausgebildet. Weiter ist ein zweites Verschleißelement 30b im ersten Bereich 14 der Scharspitze 10 vorgesehen. Das zweite Verschleißelement 30b ist als Plättchen gebildet und schließt bündig an das erste Verschleißelement 30a an. Das zweite Verschleißelement 30b kann sich durchaus auch bis in den zweiten Bereich 16 der Scharspitze erstrecken. Ein drittes Verschleißelement 30c ist zumindest bereichsweise im zweiten Bereich 16 der Scharspitze 10 vorgesehen. Das dritte Verschleißelement 30c bildet ein Plättchen aus und ist aufgrund der zumindest bereichsweisen Anordnung im zweiten Bereich 16 der Scharspitze 10 Bestandteil der zumindest abschnittsweisen bogenförmigen Lauffläche 22. Die Verschleißelemente 30 sind jeweils aus einem verschleißfesten Material, vorzugsweise aus einem Hartmetall, geformt. Aufgrund der Verwendung von Verschleißelementen 30 ist die Scharspitze 10 zumindest bereichsweise mit Hartmetall bestückt.

Des Weiteren weist die Scharspitze 10 zunächst in Bezug auf eine Arbeitsrichtung eine keilförmige Aufweitung auf, welche einen Winkel von ungefähr 25° bis 45° einschließt, wobei an diesen wiederum eine keilförmige Aufweitung anschließt, welche einen Winkel zwischen ungefähr 4° bis 8° einschließt, wobei wiederum an diese eine konische Verjüngung anschließt, welche einen Winkel zwischen ungefähr 2° bis 6° einschließt. Die keilförmigen Aufweitungen und die konische Verjüngung erstrecken sich insbesondere über den ersten Bereich 14 und zumindest bereichsweise über den zweiten Bereich 16 der Scharspitze 10. An die konische Verjüngung schließt sich insbesondere die zumindest abschnittsweise bogenförmige Lauffläche 22 des zweiten Bereichs 16 der Scharspitze 10 an.

Die Scharspitze 10 weist auf ihrer Rückseite einen Freiwinkel α in Bezug einen zu bearbeitenden Boden 36 auf. Der Freiwinkel α schließt einen Winkel zwischen 4° und 8°, vorzugsweise einen Winkel von 6° ein. Aufgrund des Freiwinkels α ist die Scharspitze 10 schräg zum Boden 36 verlaufend ausgebildet.

Die Figuren 2 und 3 zeigen die Scharspitze 10 in einem montierten Zustand an einem Scharstiel 26 in unterschiedlichen Ansichten und Perspektiven. Neben der Scharspitze 10 ist ein Leitblech 28 auf der Vorderseite des Scharstiels 26 und ein Scharrücken 26 auf der Rückseite des Scharstiels 26 vorgesehen, welche resultierend ein Scharsystem 12 ausbilden.

Der Scharstiel 26 weist eine Breite zwischen 20 mm und 30 mm, vorzugsweise eine Breite von 25 mm, auf und bildet in Bezug auf den zu bearbeitenden Boden 36 einen Winkel zwischen 7° bis 13°, vorzugsweise einen Winkel von 10°, aus, d.h. der Scharstiel 26 ist in Bezug auf den zu bearbeitenden Boden 36 gebogen ausgebildet. An einem Ende weist der Scharstiel 26 zumindest zwei Ausnehmungen auf, in welche eine Befestigungseinheit 38 zur Anbindung des Scharstiels 26 an einem Rahmen einer landwirtschaftlichen Maschine fixierbar ist.

Das Leitblech 28 ist korrespondierend zur Form des Scharstiels 26 ausgebildet und auf der Vorderseite des Scharstiels 26 angeordnet. Das Leitblech 28 schließt in Bezug auf den zu bearbeitenden Boden 36 einen Winkel zwischen 100° und 108°, vorzugsweise einen Winkel zwischen 104° ein. An einem Ende umfasst das Leitblech 28 mindestens eine Aufnahmeeinheit 44. Die mindestens eine Aufnahmeeinheit 44 nimmt zumindest abschnittsweise den Scharstiel 26 auf und sorgt für eine Ausrichtung des Leitblechs 28 bei der Montage am Scharstiel 26. Die Breite der mindestens einen Aufnahmeeinheit 44 entspricht der Breite des Scharstiels 26 und ist damit zwischen 20 mm und 30 mm, vorzugsweise 25 mm breit. Am gegenüberliegenden Ende der mindestens einen Aufnahmeeinheit 44 ist zumindest eine Rastnase 46 vorgesehen, welche im montierten Zustand in eine korrespondierende Öffnung, gebildet durch eine Nut 48, des als Befestigungsbereich 24 ausgebildeten dritten Bereichs 18 eingreifen kann. Die zumindest eine Rastnase 46 ist als quadratische Erhebung ausgebildet. Mittels der zumindest einen Rastnase 46 wird die Befestigung des Leitblechs 28 mittels des dritten Befestigungsmittels 42c unterstützt. Das dritte Befestigungsmittel 42c kann durch eine entsprechende Ausnehmung, insbesondere durch die dritte Ausnehmung 50c, des Leitblechs 28 geführt werden.

Beim montierten Zustand der Scharspitze 10 ist diese über den als Befestigungsbereich 24 ausgebildeten dritten Bereich 18 mittels zumindest drei Befestigungsmitteln 42a, 42b, 42c an zumindest einem Abschnitt einer Vorderseite eines Scharstiels 26 fixiert. Zur Durchführung der zumindest drei Befestigungsmittel 42a, 42b, 42c weist der als Befestigungsbereich 24 ausgebildete dritte Bereich 18 zumindest drei Ausnehmungen 50a, 50b, 50c in Form von Bohrungen auf, welche zueinander beabstandet angeordnet sind. Ein erstes Befestigungsmittel 42a und ein zweites Befestigungsmittel 42b verbinden die Scharspitze 10 mit dem Scharstiel 26, während ein drittes Befestigungsmittel 42c die Scharspitze 10 und das Leitblech 28 an dem Scharstiel 26 verbindet. Das erste Befestigungsmittel 42a und das zweite Befestigungsmittel 42b sind im Bereich eines freien Endes des Scharstiels 26 angeordnet, während das dritte Befestigungsmittel 42c am anliegenden Ende des als Befestigungsbereich 24 ausgebildeten dritten Bereichs 18 der Scharspitze 10 vorgesehen ist, d.h. der als Befestigungsbereich 24 ausgebildete dritte Bereich 18 ist derartig geformt, dass der als Befestigungsbereich 24 ausgebildete dritte Bereich 18 zwischen Leitblech 28 und einem Scharstiel 26 montierbar ist. Die zumindest drei Befestigungsmittel 42a, 42b, 42c sind als Schraubverbindungen ausgebildet, so dass mittels der zumindest drei Befestigungsmittel 42a, 42b, 42c eine wirkende lösbare Verbindung zwischen der Scharspitze 10, dem Leitblech 28 und dem Scharstiel 26 bewirkt wird. Das Leitblech 28 sorgt zugleich für eine Überdeckung der zumindest drei Befestigungsmittel 42a, 42b, 42c. Damit sind die zumindest drei Befestigungsmittel 42a, 42b, 42c vor Verschleiß und vor Verschmutzung geschützt, d.h. das Leitblech 28 erstreckt sich über den als Befestigungsbereich 24 ausgebildeten dritten Bereich 18.

Auf der Rückseite des Scharstiels 26 ist ein Scharrücken 34 vorgesehen. Der Scharrücken 34 umfasst wenigstens eine Aufnahme, welche sich durchgehend entlang der Längserstreckungsrichtung des Scharrückens 34 erstreckt. Die wenigstens Aufnahme des Scharrückens 34 entspricht der Breite des Scharstiels 26 und dient dazu, den Scharstiels 26 zumindest abschnittsweise aufzunehmen. Aufgrund dessen ist die Form des Scharrückens 34, insbesondere dessen wenigstens eine Aufnahme, korrespondierend zur Form des Scharstiels 26 ausgebildet. Der Scharrücken 34 umfasst auf seiner Rückseite mindestens einen Kanal (hier nicht dargestellt), welcher sich entlang der Längserstreckungsrichtung des Scharrückens 34 erstreckt. Mittels des mindestens einen Kanals wird körniges und/oder flüssiges Gut wie Dünger in den zu bearbeitenden Boden 34 abgelegt. Der Scharrücken 34 wird mittels zwei seitlich angeordneten weiteren Befestigungsmitteln am Scharstiel 26 fixiert, so dass zwischen dem Scharrücken 34 und dem Scharstiel 26 eine wirkende lösbare Verbindung gebildet wird. Die zwei seitlich angeordneten weiteren Befestigungsmittel werden jeweils durch zwei seitlich angeordnete Ausnehmungen des Scharrückens 34 und des Scharstiels 26 geführt und anschließend festgesetzt.

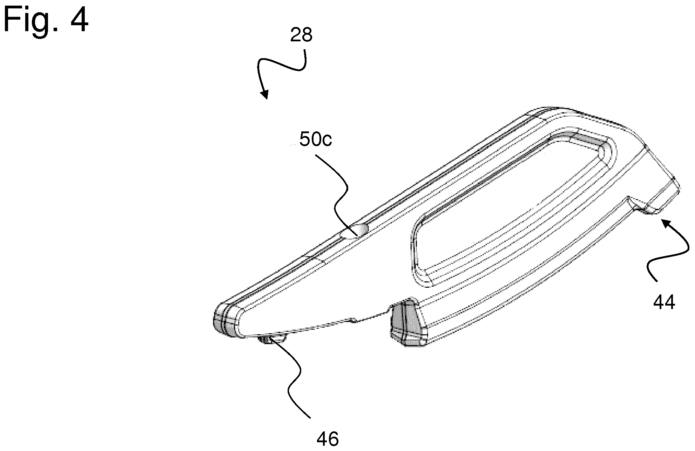

Die Figur 4 zeigt das Leitblech 28 in einer perspektivischen Ansicht. Das Leitblech 28 umfasst an einem Ende eine mindestens Aufnahmeeinheit 44, wobei die Breite der mindestens einen Aufnahmeeinheit 44 einer Breite des Scharstiels 26 entspricht. Danach ist die mindestens eine Aufnahmeeinheit 44 zwischen 20 mm und 30 mm, vorzugsweise 25 mm breit. Die mindestens eine Aufnahmeeinheit 44 kann im montierten Zustand auf der Vorderseite des Scharstiels 26 anliegen. Am gegenüberliegenden Ende ist zumindest eine Rastnase 46 vorgesehen, welche im montierten Zustand in eine korrespondierende Öffnung in Form einer Nut 48 des als Befestigungsbereich 24 ausgebildeten dritten Bereichs 18 eingreifen kann. Die zumindest eine Rastnase 46 ist als quadratische Erhebung ausgebildet. Mittels der zumindest einen Rastnase 46 wird die Befestigung des Leitblechs 28 mittels des dritten Befestigungsmittels 42c unterstützt. Das dritte Befestigungsmittel 42c kann durch eine entsprechende Ausnehmung 50c geführt werden.

Die Erfindung wurde unter Bezugnahme auf eine bevorzugte Ausführungsform anhand der Figuren 1A bis 4 näher beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Abschließend sei nochmals ausdrücklich betont, dass sich alle Aspekte, Ausführungsvarianten, alle optionalen und/oder alternativen Gestaltungen und/oder Gestaltungsmerkmale der zuvor anhand der Figuren 1A bis 3 beschriebenen Scharspitze 10 und ihrer Wirkungsweise ebenso auf das hier in verschiedenen Varianten beschriebene erfindungsgemäße Scharsystem 12 (vgl. insbesondere Fig. 2 und Fig. 3) beziehen können. Wenn also zuvor teilweise bzw. vorrangig von der Scharspitze 10 die Rede war, so beziehen sich alle in diesem Zusammenhang gemachten Aussagen gleichermaßen auf das Scharsystem 12. Gleiches gilt auch umgekehrt, so dass sich alle Aspekte, Ausführungsvarianten, alle optionalen und/oder alternativen Gestaltungen und/oder Gestaltungsmerkmale des zuvor beschriebenen erfindungsgemäßen Scharsystems 12 (vgl. insbesondere Fig. 2 und Fig. 3) und seiner Wirkungsweise und Einsatzmöglichkeiten ebenso auf die zuvor in verschiedenen Varianten beschriebene Scharspitze 10 (vgl. insbesondere Fig. 1A, Fig. 1B) beziehen können. Wenn also teilweise bzw. vorrangig von einem Scharsystem die Rede ist, so beziehen sich alle in diesem Zusammenhang gemachten Aussagen gleichermaßen auf die Scharspitze 10.

### Bezugszeichenliste

- 10: Scharspitze
- 12: Scharsystem
- 14: Erster Bereich
- 16: Zweiter Bereich
- 18: Dritter Bereich
- 20: Schneidkante
- 22: Lauffläche
- 24: Befestigungsbereich
- 26: Scharstiel
- 28: Leitblech
- 30: Verschleißelemente
- 30a: erstes Verschleißelement
- 30b: zweites Verschleißelement
- 30c: drittes Verschleißelement
- 34: Scharrücken
- 36: Boden
- 38: Befestigungseinheit
- 40a: erste Hinterschneidung
- 40b: zweite Hinterschneidung
- 42a: erstes Befestigungsmittel
- 42b: zweites Befestigungsmittel
- 42c: drittes Befestigungsmittel
- 44: Aufnahmeeinheit
- 46: Rastnase
- 48: Nut
- 50a: erste Ausnehmung
- 50b: zweite Ausnehmung
- 50c: dritte Ausnehmung

- α: Freiwinkel

## Patentansprüche

1. Scharsystem (12) zur insbesondere landwirtschaftlichen Bodenbearbeitung, das wenigstens einen Scharstiel (26), eine lösbar daran montierte Scharspitze (10) und zumindest ein Leitblech (28) und/oder weitere damit zusammenwirkende und/oder in Wechselwirkung stehende Komponenten aufweist, wobei die Scharspitze (10)
- einen, eine Schneidkante (20) aufweisenden ersten Bereich (14),
- einen, an den ersten Bereich (14) anschließenden und eine Lauffläche (22) aufweisenden zweiten Bereich (16),
- einen dritten (18), an den zweiten Bereich (16) anschließenden Befestigungsbereich (24), sowie
- eine maximale Breite aufweist, welche zwischen dem einfachen und maximal dem doppelten der Breite des Scharstiels (26) entspricht, an dem die Scharspitze (10) lösbar montiert ist,
wobei der Befestigungsbereich (24) der Scharspitze (10) zwischen dem, dem Scharsystem (12) zugeordneten Leitblech (28) und dem Scharstiel (26) lösbar montiert ist, **dadurch gekennzeichnet, dass** der erste Bereich (14) und der zweite Bereich (16) zusammen eine Länge aufweisen, welche wenigstens dem Fünffachen der Breite der Schneidkante (20) entspricht.

2. Scharsystem (12) nach Anspruch 1, bei dem sich der erste Bereich (14) mit der Schneidkante (20), der die Lauffläche (22) aufweisende zweite Bereich (16) sowie der den Befestigungsbereich (24) der Scharspitze (10) bildende dritte Bereich (18) in Längserstreckungsrichtung der Scharspitze (10) aneinander anschließen.

3. Scharsystem (12) nach Anspruch 1 oder 2, bei dem der den Befestigungsbereich (24) der Scharspitze (10) bildende dritte Bereich (18) in einer Richtung quer zur Längserstreckungsrichtung der Scharspitze (10) zwischen einem Abschnitt des Leitblechs (28) und einem Abschnitt des Scharstiels (26) geklemmt und/oder lösbar fixiert ist.

4. Scharsystem (12) nach einem der vorhergehenden Ansprüche , bei dem die Scharspitze (10) und/oder der Scharstiel (26) und/oder das Leitblech (28) zumindest abschnittsweise in Längserstreckungsrichtung einem bogenförmigen oder sichelförmigen Verlauf folgen.

5. Scharsystem (12) nach einem der vorhergehenden Ansprüche, bei dem der erste Bereich (14) keilförmig gebildet ist und einen Winkel einschließt, der zwischen 25° und 45° liegt.

6. Scharsystem (12) nach einem der vorhergehenden Ansprüche, bei dem dem ersten Bereich (14) sowie zumindest abschnittsweise dem zweiten Bereich (16) jeweils Verschleißelemente (30) zugeordnet sind.

7. Scharsystem (12) nach einem der vorhergehenden Ansprüche, bei dem die Scharspitze (10) zunächst in Bezug auf eine Arbeitsrichtung eine keilförmige Aufweitung aufweist, welche einen Winkel von 25° bis 45° einschließt, wobei an diese wiederum eine keilförmige Aufweitung anschließt, welche einen Winkel zwischen 4° bis 8° einschließt, wobei wiederum an diese eine konische Verjüngung anschließt, welche einen Winkel zwischen 2° bis 6° einschließt.

8. Scharsystem (12) nach einem der vorhergehenden Ansprüche, bei dem an die Verjüngung eine zumindest abschnittsweise bogenförmige Lauffläche (22) anschließt.

9. Scharsystem (12) nach einem der vorhergehenden Ansprüche, bei dem dem Befestigungsbereich (24) zumindest eine Bohrung zur Montage der Scharspitze (10) an einen Zinkenstiel zugeordnet ist.

10. Scharsystem (12) nach einem der vorhergehenden Ansprüche, bei dem die zumindest eine Bohrung im montierten Zustand von einem Leitblech (28) überdeckt wird.

11. Scharsystem (12) nach einem der vorhergehenden Ansprüche, bei dem die Schneidkante (20) der schmalste Abschnitt dieser ist, und der Befestigungsbereich (24) eine Breite aufweist, welche wenigstens um ein Fünftel breiter als diese ist.

## Claims

1. A coulter system (12) used, in particular, for agricultural tillage, which coulter system (12) has at least one coulter stem (26), one coulter tip (10) detachably mounted thereto, and at least one guide plate (28) and/or further components working together therewith and/or being in interaction therewith, wherein the coulter tip (10) has
- a first portion (14) having a cutting edge (20);
- a second portion (16) following the first portion (14) and having a running surface (22);
- a third (18) fastening portion (24) following the second portion (16); as well as
- a maximum width which corresponds to between the single and maximally the double of the width of the coulter stem (26) to which the coulter tip (10) is detachably mounted;
wherein the fastening portion (24) of the coulter tip (10) is detachably mounted between the guide plate (28) assigned to the coulter system (12) and the coulter stem (26), **characterised in that** the first portion (14) and the second portion (16) together have a length which corresponds to at least the fivefold of the width of the cutting edge (20).

2. The coulter system (12) according to claim 1, in which the first portion (14) with the cutting edge (20), the second portion (16) having the running surface (22), as well as the third portion (18) forming the fastening portion (24) of the coulter tip (10) follow one another in longitudinal extension direction of the coulter tip (10).

3. The coulter system (12) according to claim 1 or 2, in which the third portion (18) forming the fastening portion (24) of the coulter tip (10) is clamped and/or detachably fixed between a section of the guide plate (28) and a section of the coulter stem (26) in a direction transverse to the longitudinal extension direction of the coulter tip (10).

4. The coulter system (12) according to one of the previous claims, in which the coulter tip (10) and/or the coulter stem (26) and/or the guide plate (28) at least in sections trace an arc-shaped or crescent-shaped course in longitudinal extension direction.

5. The coulter system (12) according to one of the previous claims, in which the first portion (14) is formed wedge-shaped and encloses an angle that is between 25° and 45°.

6. The coulter system (12) according to one of the previous claims, in which wear elements (30) are in each case assigned to the first portion (14) as well as, at least in sections, to the second portion (16).

7. The coulter system (12) according to one of the previous claims, in which, in relation to a work direction, the coulter tip (10) first has a wedge-shaped widening, which encloses an angle from 25° to 45°, followed in turn by a wedge-shaped widening, which encloses an angle between 4° to 8°, followed in turn by a conical tapering, which encloses an angle between 2° to 6°.

8. The coulter system (12) according to one of the previous claims, in which the tapering is followed by a running surface (22), which is at least in sections arc-shaped.

9. The coulter system (12) according to one of the previous claims, in which at least one bore for mounting the coulter tip (10) to a tine stem is assigned to the fastening portion (24).

10. The coulter system (12) according to one of the previous claims, in which, in the mounted state, the at least one bore is covered by a guide plate (28).

11. The coulter system (12) according to one of the previous claims, in which the cutting edge (20) is the narrowest section thereof, and the fastening portion (24) has a width that is at least by one-fifth wider than it.

## Revendications

1. Système de soc (12) notamment pour le traitement agricole du sol, qui présente au moins un manche de soc (26), une pointe de soc (10) montée amovible dessus et au moins un déflecteur (28) et/ou d'autres composants coopérants avec ce qui précède et/ou en interaction les uns avec les autres, dans lequel la pointe de soc (10)
- présente une première zone (14) présentant un bord tranchant (20),
- une deuxième zone (16) raccordée à la première zone (14) et présentant une semelle (22),
- une troisième (18) zone de fixation (24) raccordée à la deuxième zone (16), ainsi qu'
- une largeur maximale qui correspond à entre une fois et au maximum le double de la largeur du manche de soc (26), à laquelle la pointe de soc (10) est montée de manière amovible,
la zone de fixation (24) de la pointe de soc (10) étant montée de manière amovible entre le déflecteur (28) associé au système de soc (12) et le manche de soc (26), **caractérisé en ce que** la première zone (14) et la deuxième zone (16) présentent, prises ensemble, une longueur qui correspond au moins à cinq fois la largeur du bord tranchant (20).

2. Système de soc (12) selon la revendication 1, dans lequel la première zone (14) dotée du bord tranchant (20), la deuxième zone (16) présentant la semelle (22) ainsi que la troisième zone (18) formant la zone de fixation (24) de la pointe de soc (10) se raccordent les unes aux autres dans le sens d'extension longitudinale de la pointe de soc (10).

3. Système de soc (12) selon la revendication 1 ou 2, dans lequel la troisième zone (18) formant la zone de fixation (24) de la pointe de soc (10) est calée et/ou fixée de manière amovible entre, dans un sens transversal au sens d'extension longitudinale de la pointe de soc (10), un tronçon du déflecteur (28) et un tronçon du manche de soc (26).

4. Système de soc (12) selon l'une quelconque des revendications précédentes, dans lequel la pointe de soc (10) et/ou le manche de soc (26) et/ou le déflecteur (28) suivent, au moins partiellement dans le sens d'extension longitudinale, un trajet en forme d'arc ou de faucille.

5. Système de soc (12) selon l'une quelconque des revendications précédentes, dans lequel la première zone (14) est formée en forme de clavette et contient un angle de 25° à 45°.

6. Système de soc (12) selon l'une quelconque des revendications précédentes, dans lequel des éléments d'usure (30) respectifs sont associés à la première zone (14) ainsi qu'au moins partiellement à la deuxième zone (16).

7. Système de soc (12) selon l'une quelconque des revendications précédentes, dans lequel la pointe de soc (10) présente dans un premier temps, par rapport à un sens de travail, un élargissement en forme de clavette qui contient un angle de 25° à 45°, auquel élargissement se raccorde à son tour un élargissement en forme de clavette qui contient un angle de 4° et 8°, à laquelle se raccorde à son tour un rétrécissement conique qui contient un angle de 2° à 6°.

8. Système de soc (12) selon l'une quelconque des revendications précédentes, dans lequel une semelle (22) au moins partiellement en forme d'arc se raccorde au rétrécissement.

9. Système de soc (12) selon l'une quelconque des revendications précédentes, dans lequel au moins un perçage destiné au montage de la pointe de soc (10) sur un manche-fourche est associé à la zone de fixation (24).

10. Système de soc (12) selon l'une quelconque des revendications précédentes, dans lequel l'au moins un perçage est, à l'état monté, recouvert par un déflecteur (28).

11. Système de soc (12) selon l'une quelconque des revendications précédentes, dans lequel le bord tranchant (20) est le tronçon le plus étroit de celui-ci, et la zone de fixation (24) présente une largeur qui est au moins supérieure d'un cinquième à celle-ci.
